# EUROPÄISCHE PATENTSCHRIFT

(11) **EP 0 984 539 B1**
(45) Veröffentlichungstag und Bekanntmachung des Hinweises auf die Patenterteilung: **22.10.2003**
(21) Anmeldenummer: 99114578.0
(22) Anmeldetag: 24.07.1999
(51) Int. Cl.: H02G 3/04, F16L 9/19

(54) **Rohrverbund**
Pipe bundle
Union de tuyaux

(30) Priorität: 29.08.1998 DE 19839449; 09.12.1998 DE 29821948 U
(43) Veröffentlichungstag der Anmeldung: 08.03.2000
(73) Patentinhaber: Dipl.-Ing. Dr. Ernst Vogelsang GmbH & Co. KG, D-45699 Herten (DE)
(72) Erfinder: Vogelsang, Horst, 45699 Herten (DE)
(74) Vertreter: Honke, Manfred, Dr.-Ing.

(56) Entgegenhaltungen:
- DE-A- 2 509 599
- DE-U- 1 863 425
- DE-U- 29 803 338
- FR-A- 2 417 197
- GB-A- 1 205 007

## Beschreibung

Die Erfindung betrifft einen Rohrverbund mit mindestens drei parallel zueinander angeordneten Kunststoffrohren, insbesondere Kabelführungsrohren, und mit einer die Kunststoffrohre unter Bildung eines Mehrfachrohres umgebenden Umhüllung, wobei die in der Umhüllung relativ zueinander beweglichen Kunststoffrohre dicht bei dicht nebeneinander angeordnet sind und von der Umhüllung mit vorgegebener Einspannung sowie unter Verzicht auf eine Adhäsivverbindung zwischen der Umhüllung und den Kunststoffrohren zusammengehalten sind.

Man kennt ein Kabelführungsaggregat aus Kunststoff mit einer Mehrzahl von Kabelführungsrohren, die unter Zwischenschaltung von flexiblen Abstandsstegen zu einer Matte vereinigt sind, insbesondere zur Einführung in einen Kabelkanal. Kabelkanal bezeichnet die z. B. im Telekommunikationsbereich üblichen Kabelkanäle für Telefonkabel, Lichtwellenleiterkabel, Breitbandkabel und andere moderne Kabelsysteme, wobei diese Kabelkanäle zumindest ihrerseits als Kunststoffrohre ausgebildet sind, aber auch aus Beton, Keramik oder dgl. bestehen können. Im Übrigen kann ein solches Kabelführungsaggregat auch ohne weiteres im Erdreich verlegt werden. Nicht nur die Kabelkanäle, sondern auch die Kabelführungsrohre nehmen Kabel auf, die in die Kabelkanäle oder Kabelführungsrohre gleichsam eingefädelt werden.

Es ist ein Kabelführungsaggregat bzw. Rohrverbund der eingangs beschriebenen Ausführungsform bekannt, bei dem die Umhüllung mit den Kunststoffrohren verklebt oder verschweißt ist, gleichgültig, ob lediglich zwei Kunststoffrohre nebeneinander oder drei Kunststoffrohre in Dreieckform angeordnet sind. Die Adhäsivverbindung zwischen der Umhüllung und den Kunststoffrohren ist aus verschiedenen Gründen nachteilig. Zunächst einmal stört, dass zwischen den einzelnen Kunststoffrohren innerhalb der Umhüllung keine Relativbewegung stattfinden kann. Eine solche Relativbewegung in z. B. Rohrlängsrichtung muss jedoch wegen der auftretenden und oft erheblichen Temperaturunterschiede und den daraus resultierenden Längendehnungen unbedingt möglich sein, weil anders die Umhüllung reißt und folglich als Verpackung der Kunststoffrohre erhebliche Beschädigungen und/oder Maßänderungen erfahren. Das ist bereits bei bloßer Sonneneinstrahlung und dem daraus resultierenden Dehnungsverhalten der Kunststoffrohre der Fall. Rissbildung und gravierende Beschädigungen der Umhüllung finden bei einem Rohrverbund mit mindestens zwei nebeneinander angeordneten Kunststoffrohren aber auch dann statt, wenn der Rohrverbund in Biegeradien und insbesondere verhältnismäßig kleinen Biegeradien verlegt werden soll. Denn dann muss das außenliegende Rohr stets einen größeren Weg als das innenliegende Rohr zurücklegen. Außerdem treten Rissbildung und gravierende Beschädigungen der Umhüllung ebenfalls auf, wenn der Rohrverbund in der Ausführungsform eines dreieckförmigen Mehrfachrohres - also bei beispielsweise drei im Dreieck angeordneten Kunststoffrohren - auf eine Kabeltrommel aufgewickelt werden soll, weil dann das obere auf den beiden unteren Kunststoffrohren aufliegende Kunststoffrohr oder die beiden oberen auf dem unteren Kunststoffrohr aufliegenden Kunststoffrohre stets einen längeren Wickelweg zurücklegen müssen und insoweit ebenfalls die Möglichkeit einer Relativbewegung zwischen den Kunststoffrohren möglich sein muss, jedoch infolge der Adhäsivverbindung zwischen der Umhüllung und den Kunststoffrohren unterbunden wird. Daraus resultieren extreme Spannungen, die ebenfalls zur Rissbildung und gravierenden Beschädigungen der Umhüllung führen. Problematisch ist in diesem Zusammenhang auch die Tatsache, dass der von der Kabeltrommel abgewickelte Rohrverbund ganz erhebliche Verwindungen erfährt, weil eben ein Bewegungsausgleich zwischen den einzelnen Kabelrohren und der Umhüllung nicht möglich ist. Ein derart verwundener Rohrverbund lässt sich nach dem Abwickeln von einer Kabeltrommel kaum noch vernünftig verlegen, jedenfalls nicht ohne erhebliche Schwierigkeiten und aufwendige Richtmaßnahmen. Im Ganzen müssen erheblich störende Rohrdeformationen beseitigt werden. Die gleichen Probleme treten dann auf, wenn man einen derartigen Rohrverbund in verhältnismäßig kleinen Biegeradien verlegen will, weil auch dann die Umhüllung wegen der Adhäsivverbindung mit den Kunststoffrohren reißt bzw. erheblich beschädigt wird.

Im Rahmen des gattungsbildenden Standes der Technik nach der DE 1 863 425 U wird ein unverseiltes Rohrbündel beschrieben, bei dem aus Kunststoff bestehende Rohre mittels eines Mantels zusammengehalten sind. Dabei berühren sich die vier Innenrohre unter Bildung eines hohlen Zwickels, während die vier Außenrohre diametral zu den Innenrohren zu liegen kommen. Hierdurch tritt im gekrümmten Zustand eine Verlagerung der Innenrohre zwischen die Außenrohre ein.

Daneben befasst sich die GB 1 205 007 A mit mehreren gebündelten Kunststoffrohren, die von einer Umhüllung umschlossen werden. Die im Innern der Umhüllung angeordneten Kunststoffrohre und auch die Umhüllung werden durch Extrusion hergestellt.

Ferner kennt man aus DE 298 03 338 U einen flexiblen Rohrverbund aus einzelnen Kunststoffrohren, wobei die Einzelrohre nach der Art zusammengefasst sind, dass die untereinander benachbarten Rohre längsverlaufend linienförmig aneinander liegen und als Rohrbündel von einer Deckschicht umgeben sind. Wenigstens zwei Einzelrohre sind über die Deckschicht zu einzelnen Rohrbündeln zusammengefasst und wenigstens zwei dieser Rohrbündel sind über einen flexiblen Verbindungssteg zu einem Mehrfachrohrbündel verbunden. Bei dieser bekannten Ausführungsform wird kein Rohrverbund verwirklicht, bei dem die beiden Einzelrohre eines Rohrbündels mit vorgegebenem Bewegungsspiel zu ihrer Deckschicht zusammengehalten sind. Vielmehr erfolgt die Zusammenfassung der Einzelrohre zu einem Rohrbündel durch Umschrumpfen, Schweißen oder Kleben.

Der Erfindung liegt das technische Problem zugrunde, einen Rohrverbund der eingangs beschriebenen Ausführungsform zu schaffen, der sich auch bei erheblich schwankenden Temperaturen einwandfrei lagern, darüber hinaus transportieren sowie auf Kabeltrommeln auf- und abwickeln lässt und welcher unschwer gerade wie auch mit engen Biegeradien verlegt werden kann, ohne dass die Umhüllung der Kunststoffrohre Beschädigungen erfährt und/oder Deformationen der Kunststoffrohre auftreten. Außerdem soll ein zur Herstellung eines solchen Rohrverbundes geeignetes Verfahren angegeben werden.

Zur Lösung dieser Aufgabe schlägt die Erfindung bei einem gattungsgemäßen Rohrverbund vor, dass die Kunststoffrohre unter Bildung einer Flachlage in Reihe angeordnet sind.

Diese Maßnahmen der Erfindung haben zunächst einmal zur Folge, dass die Kunststoffrohre in der Umhüllung Relativbewegungen zueinander und zu der Umhüllung ausführen können, so dass Verwindungen oder Rohrdeformationen nicht länger zu befürchten sind, wenn der Rohrverbund auf einer Kabeltrommel aufgewickelt bzw. abgewickelt und/oder in Biegeradien und insbesondere engen Biegeradien verlegt wird.

Die Relativbewegung der Kunststoffrohre kann nicht nur in Rohrlängsrichtung erfolgen, sondern auch derart, dass die beiden Kunststoffrohre übereinander zu liegen kommen bzw. vor Ort hochgestellt werden können, gegebenenfalls infolge des freien Kräftespiels sogar eine Schrägstellung zueinander einnehmen. Insoweit handelt es sich um einen in verlegetechnischer Hinsicht optimalen Rohrverbund, bei dem selbst aus extrem schwankenden Temperaturen resultierende Rohrdehnungen nicht länger zur Rissbildung bzw. Beschädigung der Umhüllung führen können.

Überraschenderweise sorgt die Umhüllung dennoch für einen einwandfreien Zusammenhalt der in der Umhüllung mit vorgegebenem Bewegungsspiel angeordneten Kunststoffrohre. Im Übrigen besteht auch die Möglichkeit, bei die Kunststoffrohre lose umgebender Umhüllung Distanzhalter zwischen den Rohren einzusetzen. Dadurch wird erreicht, dass die Kunststoffrohre gegenüber der Umhüllung eine Relativbewegung ausführen können. Das ist jedoch nur dann möglich, wenn während der Konfektionierung - also während der Umwicklung der beiden Kunststoffrohre mit der Umhüllung - vermieden wird, dass die Kunststoffrohre schlüssig aneinander anliegen. Die Trennung der Kunststoffrohre mittels Distanzhalter sorgt dafür, dass nach der Konfektionierung die Umhüllung größer ist als der Umfang von den beispielsweise drei nebeneinanderliegenden Kunststoffrohren.

In der Flachlage werden die Kunststoffrohre stramm in der sie umspannenden Umhüllung gehalten und können folglich als gleichsam Rohrmatte einwandfrei transportiert sowie beispielsweise auf eine Kabeltrommel aufgewickelt und abgewickelt werden, ohne dass Verwindungen oder andere Deformationen zu befürchten sind. Dennoch lässt die Umhüllung eine Relativbewegung der Kunststoffrohre zueinander zu, und zwar insbesondere in Rohrlängsrichtung, so dass selbst aus extrem schwankenden Temperaturen resultierende Rohrdehnungen nicht zur Rissbildung bzw. Beschädigung der Umhüllung führen, weil eben unter Verzicht auf eine Adhäsivverbindung zwischen der Umhüllung und den Kunststoffrohren eine Relativbewegung nicht nur zwischen den Kunststoffrohren selbst, sondern auch zwischen den Kunststoffrohren und der Umhüllung möglich ist. Will man dagegen den erfindungsgemäßen Rohrverbund in Biegeradien und insbesondere besonders kleinen bzw. engen Biegeradien verlegen, dann lässt sich das oder die mittleren Kunststoffrohre unter Bildung eines dreieckförmigen oder vieleckförmigen Rohrbündels mit die Kunststoffrohre lose umgebender Umhüllung zwischen den äußeren Kunststoffrohren herausdrücken. In diesem Zusammenhang geht die Erfindung von der Erkenntnis aus, dass der Umfang der Umhüllung dann deutlich größer ist als der von den drei Kunststoffrohren gebildete Umfang, wenn diese drei Kunststoffrohre in Dreieckform angeordnet sind, während deren Anordnung als Flachbahn zu einem Rohrumfang führt, welcher die Umhüllung gleichsam aufspannt, so dass ein strammer Sitz der in Reihe nebeneinander angeordneten Kunststoffrohre in der Umhüllung entsteht. Das gilt auch dann, wenn die Flachbahn aus vier oder mehr Kunststoffrohren gebildet wird und diese Kunststoffrohre in eine Vieleckform überführt werden. Folglich besteht auch die Möglichkeit, nach dem Verlegen des Rohrverbundes in einem Biegeradius im Anschluss an eben diesem Biegeradius zum Wiederherstellen der in die Umhüllung eingespannten Flachbahn und folglich Wiederherstellung einer Rohrmatte das mittlere Kunststoffrohr zwischen die beiden äußeren Kunststoffrohre zurückzudrücken. Insoweit wird ein Rohrverbund bzw. Mehrfachrohr mit Switch-Effekt für Matten-, Dreieck- oder Vieleckanordnung der Kunststoffrohre erreicht. Dabei bildet die Umhüllung praktisch nur eine Verpackungshilfe, bei der selbst eine Rissbildung nicht stört, wenngleich derartige Beschädigungen gar nicht zu befürchten sind. Bleibt noch zu bemerken, dass sich auch der erfindungsgemäße Rohrverbund unschwer in das Erdreich einpflügen lässt, und zwar wahlweise als Rohrmatte oder in dreieck- oder vieleckförmiger Anordnung.

Weitere vorteilhafte Maßnahmen sind im Folgenden aufgeführt. So weisen die Kunststoffrohre vorzugsweise einen gleichen Außendurchmesser auf, wobei sich beispielsweise auch fünf, sieben, neun usw. Kunststoffrohre einerseits als Flachbahn in eine Umhüllung einspannen lassen, um andererseits in dreieck- oder vieleckförmiger Anordnung eine lose Umhüllung mit entsprechendem Bewegungsspiel zwischen der Umhüllung und den Kunststoffrohren zu ermöglichen. Weiter sieht die Erfindung vor, dass die Umhüllung aus einer vorzugsweise transparenten Kunststofffolie bzw. Klarsichtfolie besteht, so dass sich Markierungen od. dgl. Kennzeichnungen auf den einzelnen Kunststoffrohren unschwer erkennen lassen, und auch nach deren Abzweigungen als Kennung zur Verfügung stehen. Nach einem Vorschlag der Erfindung, dem selbständige Bedeutung zukommt, ist vorgesehen, dass die Umhüllung bzw. Kunststofffolie als transparente Schrumpffolie aus beispielsweise PE-LD (Polyethylen Low Density) besteht. Die Schrumpffolie lässt sich beispielsweise unter Bildung der Umhüllung um die in Flachbahn nebeneinander angeordneten Kunststoffrohre umwickeln und unter Erzeugung einer vorgegebenen Einspannung auf die in Reihe nebeneinander angeordneten Kunststoffrohre aufschrumpfen, indem dieser Rohrverbund durch einen Wärmetunnel geführt wird. Zweckmäßigerweise weist die Umhüllung bzw. Schrumpffolie eine Perforation auf, damit sich bildendes Kondenswasser aus der Umhüllung nach außen austreten kann und zwischen den Kunststoffrohren keine Kanalwirkung für solches Kondenswasser eintritt. Insbesondere sorgt die Perforation dafür, dass bei einer eventuell beschädigten Folie durch das Erdreich einsickerndes Regenwasser oder steigendes Grundwasser wieder austreten kann. Insoweit wird eine Dränagewirkung erreicht.

Im Folgenden wird die Erfindung anhand einer lediglich ein Ausführungsbeispiel darstellenden Zeichnung näher erläutert. Es zeigen:
- Fig. 1: einen Vertikalschnitt durch einen Rohrverbund mit drei in Flachlage umhüllten Kunststoffrohren,
- Fig. 2: den Gegenstand nach Fig. 1 bei dreieckförmiger Anordnung der Kunststoffrohre mit Bewegungsspiel zwischen den Kunststoffrohren, und
- Fig. 3: den Gegenstand nach Fig. 2 mit dicht bei dicht in Dreieckform aneinanderliegenden Kunststoffrohren und Bewegungsspiel zwischen der Umhüllung und diesen Kunststoffrohren.

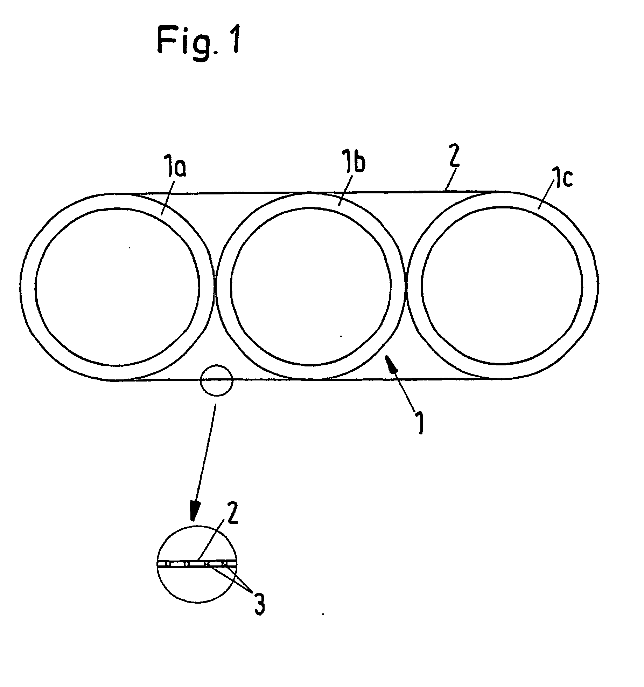

In den Figuren 1 bis 3 ist ein Rohrverbund mit drei parallel zueinander angeordneten Kunststoffrohren 1, insbesondere Kabelführungsrohren, und einer die Kunststoffrohre 1 unter Bildung eines Mehrfachrohres umgebenden Umhüllung 2 dargestellt. Die Kunststoffrohre 1 sind nach Fig. 1 unter Bildung einer Flachlage in Reihe dicht bei dicht nebeneinander angeordnet und von der Umhüllung 2 unter vorgegebener Einspannung unter Verzicht auf eine Adhäsivverbindung zwischen der Umhüllung 2 und den Kunststoffrohren 1 zusammengehalten. Die Kunststoffrohre 1 weisen einen gleichen Außendurchmesser auf. Die Umhüllung 2 besteht aus einer transparenten Kunststofffolie. Nach dem Ausführungsbeispiel ist die Kunststofffolie 2 als Schrumpffolie aus PE-LD ausgebildet und weist eine angedeutete Perforation 3 auf.

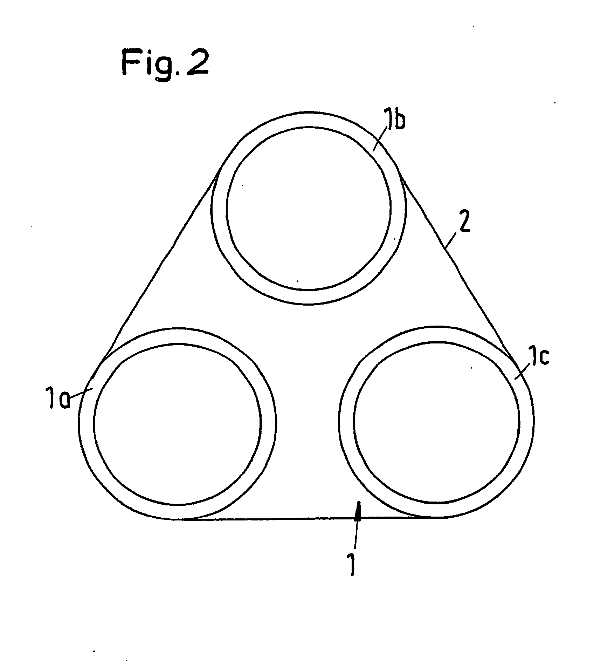

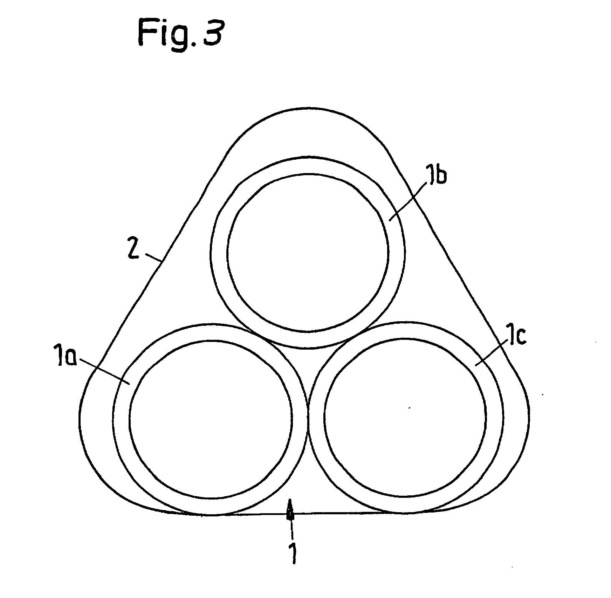

Zum Verlegen des in Flachbahn mit Umhüllung 2 eingespannten Mehrfachrohres aus eben diesen drei Kunststoffrohren 1 in vorgegebenen Biegeradien wird das mittlere Kunststoffrohr 1b unter Bildung eines dreieckförmigen Rohrbündels mit die Kunststoffrohre 1a, 1b, 1c lose umgebender Umhüllung zwischen den beiden äußeren Kunststoffrohren 1a, 1c herausgedrückt. Das ist in den Fig. 2 und 3 gezeigt, wobei die Fig. 3 deutlich macht, dass eine Adhäsivverbindung zwischen den Kunststoffrohren 1 und der Umhüllung 2 fehlt, also die Umhüllung 2 mit den Kunststoffrohren 1 weder verklebt noch verschweißt ist. Zum Wiederherstellen der in die Umhüllung 2 eingespannten Flachbahn und folglich eine Rohrmatte aus den drei Kunststoffrohren 1 kann das mittlere Kunststoffrohr 1b wieder zwischen die beiden äußeren Kunststoffrohre 1a, 1c zurückgedrückt werden, so dass sich dann wieder die Ausführungsform nach Fig. 1 ergibt.

Nach dem Ausführungsbeispiel bestehen auch die Kunststoffrohre 1 aus Polyethylen. Insoweit handelt es sich um einen thermoplastischen, säure- und laugebeständigen Kunststoff auf Olefinbasis und selbstverständlich lassen sich im Rahmen der Erfindung aber auch Rohre aus anderen Kunststoffen verwenden, so dass praktisch jede Art von Kunststoffrohr umfasst wird.

## Patentansprüche

1. Rohrverbund mit mindestens drei parallel zueinander angeordneten Kunststoffrohren (1), insbesondere Kabelführungsrohren, und mit einer die Kunststoffrohre (1) unter Bildung eines Mehrfachrohres umgebenden Umhüllung (2), wobei die in der Umhüllung (2) relativ zueinander beweglichen Kunststoffrohre (1) dicht bei dicht nebeneinander angeordnet sind und von der Umhüllung (2) mit vorgegebener Einspannung sowie unter Verzicht auf eine Adhäsivverbindung zwischen der Umhüllung (2) und den Kunststoffrohren (1) zusammengehalten sind, **dadurch gekennzeichnet, dass** die Kunststoffrohre (1) unter Bildung einer Flachlage in Reihe angeordnet sind.

2. Rohrverbund nach Anspruch 1, **dadurch gekennzeichnet, dass** die Kunststoffrohre (1) einen gleichen oder ungleichen Außendurchmesser aufweisen.

3. Rohrverbund nach Anspruch 1 oder 2, **dadurch gekennzeichnet, dass** die Umhüllung (2) aus einer transparenten, farbigen, schwarzen oder weißen Kunststofffolie besteht.

4. Rohrverbund nach einem der Ansprüche 1 bis 3, **dadurch gekennzeichnet, dass** die transparente Kunststofffolie bzw. Umhüllung (2) aus einer Schrumpffolie besteht.

5. Rohrverbund nach einem der Ansprüche 1 bis 4, **dadurch gekennzeichnet, dass** die Umhüllung (2) eine Perforation (3) aufweist.

6. Verfahren zum Herstellen eines Rohrverbundes nach einem der Ansprüche 1 bis 5, wonach zumindest drei Kunststoffrohre (1) parallel und dicht bei dicht nebeneinander ausgerichtet und in der Umhüllung (2) ohne Adhäsivverbindung eingespannt werden, **dadurch gekennzeichnet, dass** die Kunststoffrohre (1) unter Bildung einer Flachlage in Reihe eingespannt werden.

7. Verfahren nach Anspruch 6, **dadurch gekennzeichnet, dass** zum Verlegen des in der Flachbahn mit der Umhüllung (2) eingespannten Mehrfachrohres in vorgegebenen Biegeradien das mittlere Kunststoffrohr (1b) oder die mittleren Kunststoffrohre (1b) unter Bildung eines dreieckförmigen Rohrbündels oder eines vieleckförmigen Rohrbündels mit die Kunststoffrohre (1) lose umgebender Umhüllung (2) zwischen den äußeren Kunststoffrohren (1a, 1c) herausgedrückt werden.

8. Verfahren nach Anspruch 6 oder 7, **dadurch gekennzeichnet, dass** zum Wiederherstellen der in die Umhüllung (2) eingespannten Flachbahn das mittlere Kunststoffrohr (1b) oder die mittleren Kunststoffrohre (1b) zwischen die äußeren Kunststoffrohre (1a, 1c) zurückgedrückt werden.

## Claims

1. A tube composite comprising at least three plastic tubes (1) arranged parallel one to the other, especially cable guide tubes, and comprising a jacket (2) surrounding said plastic tubes (1) forming a multiple tube, wherein said plastic tubes (1) which are moveable relative to one another in said jacket (2) are arranged closely adjacent to one another and are held together by said jacket (2) with predetermined clamping and without any adhesive joint between said jacket (2) and said plastic tubes (1),
**characterised in that**
said plastic tubes (1) are arranged in a row forming a flat layer.

2. The tube composite according to claim 1,
**characterised in that**
said plastic tubes (1) have the same or different outside diameters.

3. The tube composite according to claim 1 or 2,
**characterised in that**
said jacket (2) consists of a transparent, coloured, black or white plastic film.

4. The tube composite according to any one of claims 1 to 3,
**characterised in that**
said transparent plastic film or jacket (2) consists of shrink film.

5. The tube composite according to any one of claims 1 to 4,
**characterised in that**
said jacket (2) has a perforation (3).

6. A method for manufacturing a tube composite according to any one of claims 1 to 5 wherein at least three plastic tubes (1) are aligned parallel and closely adjacent to one another and are clamped in said jacket (2) without adhesive joining, **characterised in that** said plastic tubes (1) are clamped in a row forming a flat layer.

7. The method according to claim 6,
**characterised in that**
in order to lay the multiple tube clamped in the flat path with said jacket (2) in predefined bending radii, the central plastic tube (1b) or the central plastic tubes (1b) are pressed out between the outer plastic tubes (1a, 1c) forming a triangular tube bundle or a square tube bundle with the jacket (2) loosely surrounding said plastic tubes (1).

8. The method according to claim 6 or 7,
**characterised in that**
in order to restore the flat path clamped in said jacket (2) said central plastic tube (1b) or said central plastic tubes (1b) are pressed back between said outer plastic tubes (1a, 1c).

## Revendications

1. Liaison de tube avec au moins trois tubes en matière plastique (1) disposés parallèlement les uns par rapport aux autres, en particulier tubes de câbles, et avec une enveloppe (2) entourant les tubes en plastique (1) en formant un tube multitubulaire, moyennant quoi les tubes en matière plastique (1) mobiles les uns par rapport aux autres dans l'enveloppe (2) sont disposés étroitement côté à côte et sont retenus ensembles par l'enveloppe (2) avec un serrage prédéfini ainsi qu'en renonçant à une liaison adhésive entre l'enveloppe (2) et les tubes en matière plastique (1),
**caractérisée en ce que**
les tubes en matière plastique (1) sont disposés en rang en formant une position à plat.

2. Liaison de tube selon la revendication 1,
**caractérisée en ce que**
les tubes en matière plastique (1) présentent un diamètre extérieur identique ou différent.

3. Liaison de tube selon l'une quelconque des revendications 1 ou 2,
**caractérisée en ce que**
l'enveloppe (2) se compose d'un film en matière plastique transparent, coloré, noir, ou blanc.

4. Liaison de tube selon l'une quelconque des revendications 1 à 3,
**caractérisée en ce que**
le film en matière plastique transparent et/ou l'enveloppe (2) se compose d'un film rétractable.

5. Liaison de tube selon l'une quelconque des revendications 1 à 4,
**caractérisée en ce que**
l'enveloppe (2) présente une perforation (3).

6. Procédé pour la fabrication d'une liaison de tube selon l'une quelconque des revendications 1 à 5, selon lequel au moins trois tubes en matière plastique (1) sont disposés parallèlement et étroitement côte à côté et sont serrés dans l'enveloppe (2) sans liaison adhésive, **caractérisé en ce que** les tubes en matière plastique (1) sont serrés en rang en formant une position à plat.

7. Procédé selon la revendication 6,
**caractérisé en ce que**
pour la pose du tube multitubulaire serré avec l'enveloppe (2) dans le parcours à plat selon des rayons de courbure prédéfinis, le tube en matière plastique du milieu (1b) ou les tubes en matière plastique du milieu (1b) sont poussés en-dehors entre les tubes en matière plastique (1a, 1c) extérieurs en formant un paquet de tubes en forme de triangle ou un paquet de tubes en forme de polygone avec l'enveloppe (2) entourant les tubes en matière plastique (1) de manière lâche.

8. Procédé selon l'une quelconque des revendications 6 ou 7,
**caractérisé en ce que**
pour rétablir le parcours à plat serré dans l'enveloppe (2), le tube en matière plastique (1b) du milieu ou les tubes en matière plastique du milieu (1b) sont repoussés en arrière entre les tubes en matière plastique (1a, 1c) extérieurs.
